(19) Europäisches Patentamt / European Patent Office / Office européen des brevets

(11) **EP 3 805 297 A1**

(12) **EUROPEAN PATENT APPLICATION**
published in accordance with Art. 153(4) EPC

(43) Date of publication:
**14.04.2021 Bulletin 2021/15**

(51) Int Cl.:
*C08J 9/00* (2006.01)    *C08L 25/12* (2006.01)
*C08K 3/04* (2006.01)    *C08K 3/22* (2006.01)
*C08F 212/08* (2006.01)    *C08J 3/02* (2006.01)
*B29C 44/34* (2006.01)

(21) Application number: **19810767.4**

(22) Date of filing: **21.05.2019**

(86) International application number:
**PCT/KR2019/006095**

(87) International publication number:
**WO 2019/231161 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2018 KR 20180060949**

(71) Applicant: **Lotte Chemical Corporation**
**Seoul, 05551 (KR)**

(72) Inventors:
• **KIM, Dong Hee**
**Uiwang-Si Gyeonggi-do 16073 (KR)**
• **KIM, Sung Hun**
**Uiwang-Si Gyeonggi-do 16073 (KR)**
• **SHIN, Hwan Ho**
**Uiwang-Si Gyeonggi-do 16073 (KR)**
• **LEE, Byeong Do**
**Uiwang-Si Gyeonggi-do 16073 (KR)**
• **AHN, Jun Hwan**
**Uiwang-Si Gyeonggi-do 16073 (KR)**

(74) Representative: **Michalski Hüttermann & Partner Patentanwälte mbB**
**Speditionstraße 21**
**40221 Düsseldorf (DE)**

(54) **FOAMABLE RESIN COMPOSITION, PREPARATION METHOD THEREFOR, AND MOLDED FOAM PRODUCT**

(57)    The foamable resin composition of the present invention comprises: an aromatic vinyl-based copolymer resin; an insulating material; and a foaming agent, wherein the aromatic vinyl-based copolymer resin is a copolymer of a monomer mixture comprising: about 90 to about 99 wt% of an aromatic vinyl-based monomer; and about 1 to about 10 wt% of a cyanide vinyl-based monomer. The foamable resin composition is excellent in insulating properties, gas barrier properties (retention rate of the foaming agent), and the like, and has a proper size and a uniform cell structure upon preliminary foaming.

EP 3 805 297 A1

**Description**

[Technical Field]

The present invention relates to a foamable resin composition, a method of preparing the same, and a molded foam product manufactured using the same. More specifically, the present invention relates to a foamable resin composition which has good thermal insulation properties and gas barrier properties (blowing agent retention capability) and has a uniform and properly-sized cell structure upon pre-expansion, a method of preparing the same, and a molded foam product manufactured using the same.

[Background Art]

A foamable resin composition is a resin composition (particles) that can be expanded through diffusion and volatilization of a blowing agent into the air upon heating with steam or the like, and is produced into a molded article (molded foam product) by being pre-expanded to a desired density and charged into a mold, followed by heating and fusing. Molded articles manufactured in this way are used in various fields, comprising packaging materials for home appliances, boxes for agricultural and marine products, buoys, and insulators for buildings, due to high strength, light weight, cushioning properties, waterproofness, and heat retention and insulation properties thereof.

Typically, a foamable resin composition is prepared through a process in which water, an aromatic vinyl monomer, a polymerization initiator, and a suitable suspension stabilizer are placed in a reactor, followed by stirring to prepare a dispersion, which, in turn, is heated to prepare a particulate aromatic vinyl resin through polymerization, accompanied by addition of a blowing agent before, during, or after polymerization, thereby finally obtaining a foamable resin composition in particle form.

In addition, in order to improve thermal insulation properties, an insulating material such as graphite, carbon black, and alumina may be used in preparation of a foamable resin composition. However, use of such an insulating material can cause deterioration in gas barrier properties (blowing agent retention capability) of the foamable resin composition, thus making it difficult to store or distribute the foamable resin composition for a long time while causing deterioration in cell quality of a pre-expanded product.

Therefore, there is a need for a foamable resin composition which has good thermal insulation properties and gas barrier properties and has a uniform and properly-sized cell structure upon pre-expansion.

The background technique of the present invention is disclosed in Korean Patent Registration No. 10-0492199.

[Disclosure]

[Technical Problem]

It is one aspect of the present invention to provide a foamable resin composition which has good thermal insulation properties and gas barrier properties (blowing agent retention capability) and has a uniform and properly-sized cell structure upon pre-expansion.

It is another aspect of the present invention to provide a method of preparing the foamable resin composition set forth above.

It is a further aspect of the present invention to provide a molded foam product manufactured using the foamable resin composition set forth above.

The above and other aspects of the present invention can be achieved by the present invention described below.

[Technical Solution]

1. One aspect of the present invention relates to a foamable resin composition. The foamable resin composition comprises: an aromatic vinyl copolymer resin; an insulating material; and a blowing agent, wherein the aromatic vinyl copolymer resin is a copolymer of a monomer mixture comprising about 90 wt% to about 99 wt% of an aromatic vinyl monomer and about 1 wt% to about 10 wt% of a vinyl cyanide monomer.

2. In Embodiment 1, the foamable resin composition may comprise: about 100 parts by weight of the aromatic vinyl copolymer resin; about 2 parts by weight to about 8 parts by weight of the insulating material; and about 3 parts by weight to about 15 parts by weight of the blowing agent.

3. In Embodiment 1 or 2, the insulating material may comprise at least one of graphite, carbon black, and alumina.

4. In Embodiments 1 to 3, the foamable resin composition may consist of particles having an average particle diameter of about 0.5 mm to about 1.7 mm, as measured using ASTM E11 standard sieves.

5. In Embodiments 1 to 4, the foamable resin composition may have a thermal conductivity of about 0.029 W/m·K to about 0.034 W/m·K, as measured on a foam specimen in accordance with KS L 9016, the foam specimen being obtained by pre-expansion with steam at a pressure of 0.2 kgf/cm$^2$ to 0.5 kgf/cm$^2$, expansion to a density of 15 kg/m$^3$ to 35 kg/m$^3$ with steam at a pressure of 0.2 kgf/cm$^2$ to 0.5 kgf/cm$^2$, cutting the resulting product to a size of 300 mm×300 mm×50 mm, and drying at 60°C for 48 hours.

6. In Embodiments 1 to 5, the foamable resin composition may have a blowing agent retention rate of about 75% to about 95%, as calculated according to Equation 1:

$$\text{[Equation 1]}$$

$$\text{Blowing agent retention rate (\%)} = (G_1/G_0) \times 100$$

where $G_0$ is the blowing agent content of the foamable resin composition measured immediately after preparation thereof and $G_1$ is the blowing agent content of the foamable resin composition measured after leaving the foamable resin composition at room temperature under normal pressure for 7 days.

7. In Embodiments 1 to 6, the foamable resin composition may have an expansion ratio of about 79 to about 95, as measured after expansion through application of steam at a pressure of 0.2 kgf/cm$^2$ for 5 minutes, followed by drying at 60°C for 2 hours.

8. In Embodiments 1 to 7, the foamable resin composition may have an expansion ratio of about 70 to about 85, as measured after leaving the foamable resin composition at room temperature under normal pressure for 7 days, followed by expansion through application of steam at a pressure of 0.2 kgf/cm$^2$ for 5 minutes and drying at 60°C for 2 hours.

9. In Embodiments 1 to 8, the foamable resin composition may have an average cell size of about 50 μm to about 400 μm, as determined by observation of a cross-section of a foam specimen with an optical microscope at 200× magnification, the foam specimen being prepared through application of steam at a pressure of 0.2 kgf/cm$^2$ for 5 minutes.

10. Another aspect of the present invention relates to a method of preparing a foamable resin composition. The method comprises: preparing a suspension by mixing a dispersion medium comprising water and a dispersant with a dispersed phase comprising a monomer mixture comprising about 90 wt% to about 99 wt% of an aromatic vinyl monomer and about 1 wt% to about 10 wt% of a vinyl cyanide monomer, an initiator, and an insulating material; preparing an aromatic vinyl copolymer resin comprising the insulating material by polymerization of the suspension; and adding a blowing agent to the aromatic vinyl copolymer resin comprising the insulating material.

11. In Embodiment 10, the dispersed phase may comprise about 100 parts by weight of the monomer mixture, about 0.05 parts by weight to about 0.5 parts by weight of the initiator, and about 2 parts by weight to about 8 parts by weight of the insulating material; the dispersion medium may comprise 100 parts by weight of the water and about 0.1 parts by weight to about 4 parts by weight of the dispersant; and the dispersed phase and the dispersion medium may be present in a weight ratio of about 1:0.8 to about 1:2.

12. In Embodiment 10 or 11, the initiator may comprise at least one of benzoyl peroxide, dicumyl peroxide, tertiary-amyl(2-ethylhexyl)monoperoxycarbonate, tertiary-butyl(2-ethylhexyl)monoperoxycarbonate, and dibenzoyl peroxide.

13. In Embodiments 10 to 12, the dispersant may comprise at least one of tricalcium phosphate, magnesium pyrophosphate, and calcium carbonate.

14. In Embodiments 10 to 13, polymerization of the suspension may be carried out at a temperature of about 80°C to about 130°C.

15. A further aspect of the present invention relates to a molded foam product. The molded foam product is manufactured by pre-expanding the foamable resin composition according to any one of embodiments 1 to 9 and charging the resulting product into a mold, followed by heating and fusing.

[Advantageous Effects]

The present invention provides a foamable resin composition which exhibits good thermal insulation properties and gas barrier properties (blowing agent retention capability) and has a uniform and properly-sized cell structure upon pre-expansion, a method of preparing the same, and a molded foam product manufactured using the same.

[Best Mode]

Hereinafter, embodiments of the present invention will be described in detail.

A foamable resin composition according to the present invention comprises: (A) an aromatic vinyl copolymer resin; (B) an insulating material; and (C) a blowing agent.

(A) Aromatic vinyl copolymer resin

The aromatic vinyl copolymer resin according to the present invention is a copolymer of a monomer mixture comprising an aromatic vinyl monomer and a vinyl cyanide monomer and can improve gas barrier properties (blowing agent retention capability) of the foamable resin composition even when the insulating material is comprised in the resin composition while allowing formation of a relatively uniform and properly sized cell structure upon pre-expansion of the resin composition, as compared with typical aromatic vinyl copolymer resins used in foamable resin compositions. The aromatic vinyl copolymer resin may be obtained by reacting the monomer mixture by any known polymerization method, for example, suspension polymerization. In addition to the aromatic vinyl monomer and the vinyl cyanide monomer, the monomer mixture may further comprise a monomer imparting processability and heat resistance, as needed.

In some embodiments, the aromatic vinyl monomer may comprise, for example, styrene, $\alpha$-methylstyrene, $\beta$-methylstyrene, p-methylstyrene, p-t-butylstyrene, ethylstyrene, vinylxylene, monochlorostyrene, dichlorostyrene, dibromostyrene, and vinyl naphthalene. These may be used alone or as a mixture thereof.

In some embodiments, the aromatic vinyl monomer may be present in an amount of about 90% by weight (wt%) to about 99 wt%, for example, about 92 wt% to about 98 wt%, based on the weight of the monomer mixture. If the amount of the aromatic vinyl monomer is less than about 90 wt% based on the weight of the monomer mixture, there is a concern of deterioration in expandability of the foamable resin composition. If the amount of the aromatic vinyl monomer exceeds about 99 wt% based on the weight of the monomer mixture, there is a concern of deterioration in gas barrier properties of the foamable resin composition and deterioration in cell quality of a pre-expanded product and a molded foam product due to formation of extremely large and non-uniform cells.

In some embodiments, the vinyl cyanide monomer is copolymerizable with the aromatic vinyl monomer, and may comprise, for example, acrylonitrile, methacrylonitrile, ethacrylonitrile, $\alpha$-chloroacrylonitrile, and fumaronitrile. These may be used alone or as a mixture thereof. For example, the vinyl cyanide monomer may comprise acrylonitrile and methacrylonitrile.

In some embodiments, the vinyl cyanide monomer may be present in an amount of about 1 wt% to about 10 wt%, for example, about 2 wt% to about 8 wt%, based on the weight of the monomer mixture. If the amount of the vinyl cyanide monomer is less than about 1 wt% based on the weight of the monomer mixture, there is a concern of deterioration in gas barrier properties of the foamable resin composition and deterioration in cell quality of a pre-expanded product and a molded foam product. If the amount of the vinyl cyanide monomer exceeds about 10 wt% based on the weight of the monomer mixture, there is a concern of deterioration in expandability of the foamable resin composition.

In some embodiments, the monomer imparting processability and heat resistance may comprise, for example, (meth)acrylic acids, maleic anhydride, and N-substituted maleimide, without being limited thereto. When used in the monomer mixture, the monomer imparting processability and heat resistance may be present in an amount of about 15 wt% or less, for example, about 0.1 wt% to about 10 wt%, based on the weight of the monomer mixture. Within this range, the monomer imparting processability and heat resistance can impart processability and heat resistance to the foamable resin composition without deterioration in other properties.

In some embodiments, the aromatic vinyl copolymer resin may have a weight average molecular weight of about 230,000 g/mol to about 470,000 g/mol, for example, about 250,000 g/mol to about 350,000 g/mol, as measured by gel permeation chromatography (GPC). Within this range, the foamable resin composition can have good processability and mechanical properties.

(B) Insulating material

The insulating material according to the present invention serves to improve thermal insulation properties of the foamable resin composition (or a molded foam product thereof), and may comprise any typical insulating material used in foamable resin compositions.

In some embodiments, the insulating material may comprise at least one of graphite, carbon black, and alumina.

In some embodiments, the insulating material may be present in an amount of about 2 parts by weight to about 8 parts by weight, for example, about 3 parts by weight to about 5 parts by weight, relative to about 100 parts by weight of the aromatic vinyl copolymer resin (or the monomer mixture). Within this range, the foamable resin composition can have good thermal insulation properties, expandability, and cell quality.

(C) Blowing agent

The blowing agent according to the present invention may comprise any typical volatile blowing agent used in foamable resin compositions. For example, the blowing agent may comprise hydrocarbon compounds, such as propane, butane, isobutane, pentane, isopentane, cyclopentane, hexane, and a mixture thereof and fluorohydrocarbon compounds, such as hydrochlorofluorocarbons (HCFCs), hydrofluorocarbons (HFCs), and a mixture thereof. These may be used alone or as a mixture thereof.

In some embodiments, the blowing agent may be present in an amount of about 3 parts by weight to about 15 parts by weight, for example, about 4 parts by weight to about 8 parts by weight, relative to about 100 parts by weight of the aromatic vinyl copolymer resin. Within this range, the foamable resin composition can have good thermal insulation properties, expandability, and cell quality.

The foamable resin composition according to the present invention may further comprise at least one of a nucleating agent and a flame retardant, as needed.

In some embodiments, the nucleating agent serves to allow a pre-expanded product and a molded foam product of the foamable resin composition to have a uniform cell structure, and may comprise polyolefin wax and the like. For example, the polyolefin wax may be obtained by polymerization of an olefin monomer such as ethylene, propylene, isopropylene, butylene, isobutylene, and a mixture thereof. Specifically, the polyolefin wax may be obtained by polymerization of ethylene. In addition, the polyolefin wax may have a weight average molecular weight of about 500 g/mol to about 3,000 g/mol, as measured by gel permeation chromatography (GPC). Within this range, the nucleating agent can allow a pre-expanded product and a molded foam product of the foamable resin composition to have a more uniform cell structure.

In some embodiments, the nucleating agent may be present in an amount of about 0.2 parts by weight to about 2 parts by weight, for example, about 0.3 parts by weight to about 1 part by weight, relative to about 100 parts by weight of the aromatic vinyl copolymer resin. Within this range, the foamable resin composition can form a uniform cell structure.

In some embodiments, the flame retardant serves to improve flame retardancy of the foamable resin composition (or a molded foam product thereof), and may comprise any typical flame retardant used in foamable resin compositions. For example, the flame retardant may comprise at least one of hexabromocyclododecane, 1,3-butane brominated ethylbenzene polymer, and 1,1'-(isopropylidene)bis[3,5-dibromo-4-(2,3-dibromo-2-methylpropyl)benzene].

In some embodiments, the flame retardant may be present in an amount of about 0.3 parts by weight to about 2 parts by weight, for example, about 0.5 parts by weight to about 1.5 parts by weight, relative to about 100 parts by weight of the aromatic vinyl copolymer resin (or the monomer mixture). Within this range, the foamable resin composition (or a molded foam product thereof) can have good flame retardancy, expandability, and cell quality.

The foamable resin composition according to the present invention may be prepared by any typical foamable resin composition preparation method except for using a specific dispersed phase comprising the monomer mixture. For example, the foamable resin composition according to the present invention may be prepared by a preparation method comprising: preparing a suspension by mixing a dispersion medium comprising water and a dispersant with a dispersed phase comprising the monomer mixture comprising the aromatic vinyl monomer and the vinyl cyanide monomer, an initiator, and the insulating material; preparing the aromatic vinyl copolymer resin comprising the insulating material through polymerization of the suspension; and adding the blowing agent to the aromatic vinyl copolymer resin comprising the insulating material.

In some embodiments, the initiator may comprise any typical initiator used in suspension polymerization of a thermoplastic resin. For example, the initiator may comprise at least one of benzoyl peroxide, dicumyl peroxide, tertiary-amyl(2-ethylhexyl)monoperoxycarbonate, tertiary-butyl(2-ethylhexyl)monoperoxycarbonate, and dibenzoyl peroxide.

In some embodiments, the initiator may be present in an amount of about 0.05 parts by weight to about 0.5 parts by weight, for example, about 0.1 parts by weight to about 0.4 parts by weight, relative to about 100 parts by weight of the monomer mixture. Within this range, stable polymerization can be achieved, whereby the prepared aromatic vinyl copolymer resin can have proper properties.

In some embodiments, the dispersed phase may further comprise at least one selected from the nucleating agent and the flame retardant, as needed.

In some embodiments, the water may comprise any typical water used as a dispersion medium in suspension polymerization, for example, ultrapure water, ion-exchanged water, and the like.

In some embodiments, the dispersant may comprise at least one of tricalcium phosphate, magnesium pyrophosphate, and calcium carbonate. For example, the dispersant may be tricalcium phosphate.

In some embodiments, the dispersant may be present in an amount of about 0.1 parts by weight to about 4 parts by weight, for example, about 0.2 parts by weight to about 3 parts by weight, relative to about 100 parts by weight of the water. Within this range, stable dispersion of a suspension system can be achieved and properly sized particles can be obtained as the foamable resin composition.

In some embodiments, the foamable resin composition may be prepared by: preparing a suspension by mixing the dispersion medium with the dispersed phase; preparing the aromatic vinyl copolymer resin comprising the insulating material through polymerization of the suspension at a temperature of about 80°C to about 130°C, for example, about 90°C to about 110°C, for about 1 to about 10 hours; and adding the blowing agent to the aromatic vinyl copolymer resin comprising the insulating material, followed by reaction at a temperature of about 100°C to about 130°C, for example, about 110°C to about 130°C, for about 1 to about 10 hours. The prepared foamable resin composition may be subjected to typical dehydration and drying processes, thereby obtaining a final product in particle form.

In some embodiments, the dispersed phase and the dispersion medium may be present in a weight ratio (dispersed phase:dispersion medium) of about 1:0.8 to about 1:2, for example, about 1:0.9 to about 1:1.5. Within this range, the foamable resin composition particles can have a uniform particle size distribution.

The foamable resin composition according to the present invention may consist of particles having an average particle diameter of about 0.5 mm to about 1.7 mm, for example, about 0.6 mm to about 1.4 mm, as measured using ASTM E11 standard sieves. Within this range, generation of voids during formation of particles can be minimized and the resin composition can have good thermal conductivity.

In some embodiments, the foamable resin composition may have a thermal conductivity of about 0.029 W/m·K to about 0.034 W/m·K, for example, about 0.030 W/m·K to about 0.033 W/m·K, as measured on a foam specimen in accordance with KS L 9016, the foam specimen being prepared by pre-expansion with steam at a pressure of 0.2 kgf/cm$^2$ to 0.5 kgf/cm$^2$, expansion to a density of 15 kg/m$^3$ to 35 kg/m$^3$ with steam at a pressure of 0.2 kgf/cm$^2$ to 0.5 kgf/cm$^2$, cutting the resulting product to a size of 300 mm×300 mm×50 mm, and drying at 60°C for 48 hours. This means that the foamable resin composition satisfies a thermal conductivity standard for each density condition specified in KS M 3808.

In some embodiments, the foamable resin composition may have a blowing agent retention rate of about 75% to about 95%, for example, about 75% to about 90%, as calculated by Equation 1:

[Equation 1]

$$\text{Blowing agent retention rate (\%)} = (G_1/G_0) \times 100$$

where $G_0$ is the blowing agent content of the foamable resin composition measured immediately after preparation thereof and $G_1$ is the blowing agent content of the foamable resin composition measured after leaving the foamable resin composition at room temperature under normal pressure for 7 days. Here, the blowing agent content was measured for 20 mg of the foamable resin composition (particles) by gas chromatography (GC).

In some embodiments, the foamable resin composition may have an expansion ratio of about 79 to about 95, for example, about 82 to about 90, as measured after expansion through application of steam at a pressure of 0.2 kgf/cm$^2$ for 5 minutes, followed by drying at 60°C for 2 hours. In measurement of the expansion ratio, particle density (unit: g/cm$^3$) was calculated by measuring the weight and volume of the dried foamable resin composition particles using a measuring cylinder and a scale, followed by dividing the calculated particle density by a particle density of the foamable resin composition particles before expansion, thereby obtaining the expansion ratio.

In some embodiments, the foamable resin composition may have an expansion ratio of about 70 to about 85, for example about 72 to about 80, as measured after leaving the foamable resin composition at room temperature under normal pressure for 7 days, followed by expansion through application of steam at a pressure of 0.2 kgf/cm$^2$ for 5 minutes and drying at 60°C for 2 hours.

In some embodiments, the foamable resin composition may have an average cell diameter of about 50 $\mu$m to about 400 $\mu$m, for example, about 100 $\mu$m to about 250 $\mu$m, as determined by observation of a cross-section of a foam specimen with an optical microscope at 200 magnification, the foam specimen being prepared through application of steam at a pressure of 0.2 kgf/cm$^2$ for 5 minutes.

In accordance with another aspect of the present invention, a molded foam product is manufactured by expanding the foamable resin composition. For example, the molded foam product may be manufactured by pre-expanding the foamable resin composition and charging the resulting product into a mold, followed by heating and fusing.

In some embodiments, the molded foam product may be manufactured by charging (introducing) the foamable resin composition into a non-hermetic mold, followed by fusing the foamable resin composition particles in the mold using hot air or water vapor at a pressure of, for example, 0.1 kgf/cm$^2$ to 0.5 kgf/cm$^2$. The molded foam product may have a uniform cell structure and may have an average cell diameter of about 50 $\mu$m to about 400 $\mu$m, for example, about 100 $\mu$m to about 250 $\mu$m. Within this range of average cell size, the molded foam product can have good expandability, melt-adhesion, strength, and cushioning properties.

In some embodiments, the foamable resin composition may be pre-expanded particles fabricated by pre-expansion (heating to a softening point or higher). Here, pre-expansion may be, for example, expansion to a density of about 10 kg/m$^3$ to about 35 kg/m$^3$, specifically about 15 kg/m$^3$ to about 35 kg/m$^3$, by heating to a temperature of about 80°C to about 120°C, for example, about 90°C to about 110°C, using a heating medium such as steam at a pressure of about 0.2 kgf/cm$^2$. Under these conditions, good balance between expandability and strength can be achieved.

The pre-expanded particles and the molded foam product can be easily fabricated by those of ordinary skill in the art to which the present invention pertains.

[Mode for Invention]

Next, the present invention will be described in more detail with reference to some examples. It should be understood that these examples are provided for illustration only and are not to be in any way construed as limiting the present invention.

**EXAMPLE**

**Examples 1 to 3 and Comparative Examples 1 to 3**

First, (A) a monomer mixture comprising (A1) an aromatic vinyl monomer (styrene) and (A2) a vinyl cyanide monomer (acrylonitrile) and (B) an insulating material (graphite, GRAPHIT KROPFMUHL) were placed in amounts as listed in Table 1 in a dissolution tank and then, relative to 100 parts by weight of the monomer mixture, 0.3 parts by weight of benzoyl peroxide and 0.15 parts by weight of a mixture of tertiary-amyl(2-ethylhexyl)monoperoxycarbonate and tertiarybutyl(2-ethylhexyl)monoperoxycarbonate as an initiator, 0.5 parts by weight of polyethylene wax (Baker Hughes Inc.) as a nucleating agent, and 0.65 parts by weight of 1,1'-(isopropylidene)bis[3,5-dibromo-4-(2,3-dibromo-2-methylpropyl)benzene] as a flame retardant were added thereto, followed by stirring, thereby preparing a dispersed phase. Then, 100 parts by weight of water (ultrapure water) and 5 parts by weight of tricalcium phosphate were placed in a reactor, followed by stirring, thereby preparing a dispersion medium. Then, the dispersed phase and the dispersion medium were mixed in a weight ratio of 1:1.2 in the reactor, thereby preparing a suspension, which, in turn, was subjected to polymerization at 90°C for 5 hours. Then, relative to 100 parts by weight of the monomer mixture, 8.5 parts by weight of (C) a blowing agent (pentane mixture gas) was added, followed by maintaining the reactor at a temperature of 121°C for 3 to 5 hours, thereby preparing a foamable resin composition (particles). The prepared foamable resin composition was evaluated as to the following properties. Results are shown in Table 1.

Property evaluation

(1) Thermal conductivity (unit: W/m·K): Each of the foamable resin compositions prepared in Examples and Comparative Examples was pre-expanded with steam at a pressure of 0.2 kg/cm$^2$ and then expanded to a density of 15 kg/m$^3$ to 35 kg/m$^3$ with steam at a pressure of 0.2 kg/cm$^2$ to 0.5 kg/cm$^2$, thereby preparing a foam specimen, which, in turn, was cut to a size of 300 mm×300 mm×50 mm and was dried at 60°C for 48 hours, followed by measurement of thermal conductivity in accordance with KS L 9016.
(2) Blowing agent content (unit: wt%) and blowing agent retention rate (unit: %): Each of the foamable resin compositions prepared in Examples and Comparative Examples was left at room temperature under normal pressure for 24 hours immediately after preparation thereof, followed by leaving the resin composition at room temperature under normal pressure for 7 days. Then, the resin composition was sampled, followed by measurement of the blowing agent content by gas chromatography (GC) and calculation of the blowing agent retention rate according to Equation 1.

$$[Equation\ 1]$$

$$Blowing\ agent\ retention\ rate\ (\%) = (G_1/G_0) \times 100$$

where $G_0$ is the blowing agent content of the foamable resin composition measured immediately after preparation thereof and $G_1$ is the blowing agent content of the foamable resin composition measured after leaving the foamable resin composition at room temperature under normal pressure for 7 days.
(3) Expansion ratio (unit: times): Each of the foamable resin compositions prepared in Examples and Comparative Examples was left at room temperature under normal pressure for 24 hours immediately after preparation thereof, followed by leaving the resin composition at room temperature under normal pressure for 7 days. Then, the resin composition was sampled and then subjected to expansion by application of steam at a pressure of 0.2 kgf/cm$^2$ for 5 minutes and drying at 60°C for 2 hours, followed by measurement of the expansion ratio. In measurement of the expansion ratio, particle density (unit: g/cm$^3$) was calculated by measuring the weight and volume of the dried foamable resin composition particles using a measuring cylinder and a scale, followed by dividing the calculated particle density by a particle density of the foamable resin composition particles before expansion, thereby obtaining the expansion ratio.

(4) Average cell diameter: A cross-section of a foam specimen prepared by expanding each of the foamable resin compositions prepared in Examples and Comparative Examples by application of steam at a pressure of 0.2 kgf/cm$^2$ for 5 minutes was observed with an optical microscope at 200× magnification. Here, 10 cells were randomly selected, followed by measurement of a diameter (size) of each cell and then the average cell diameter (size, unit: μm) was calculated from the measured diameter values.

Table 1

| | | | Example | | | Comparative Example | | |
|---|---|---|---|---|---|---|---|---|
| | | | 1 | 2 | 3 | 1 | 2 | 3 |
| (A) (wt%) | | (A1) Styrene | 93 | 95 | 97 | 100 | 89 | 95 |
| | | (A2) Acrylonitril e | 7 | 5 | 3 | - | 11 | 5 |
| (B) Graphite (parts by weight) | | | 4 | 4 | 4 | 4 | 4 | - |
| Thermal conductivity (W/m·K) | | | 0.0318 | 0.0320 | 0.0323 | 0.0318 | 0.0324 | 0.0363 |
| Immediately after preparation | | Blowing agent content (wt%) | 6.1 | 6.2 | 6.0 | 6.2 | 6.3 | 6.5 |
| | | Expansion ratio (times) | 82 | 87 | 88 | 84 | 75 | 90 |
| 24 hours later | | Blowing agent content (wt%) | 5.8 | 5.8 | 5.5 | 5.3 | 5.9 | 6.1 |
| | | Expansion ratio (times) | 79 | 82 | 80 | 75 | 68 | 84 |
| 7 days later | | Blowing agent content (wt%) | 5.3 | 5.1 | 4.9 | 4.0 | 5.6 | 5.6 |
| | | Expansion ratio (times) | 75 | 75 | 72 | 63 | 63 | 79 |
| Blowing agent retention rate (%) | | | 86.9 | 82.3 | 81.7 | 64.5 | 88.9 | 86.2 |
| Average cell size (μm) | | | 125 | 143 | 128 | 457 | 108 | 117 |
| *parts by weight: relative to 100 parts by weight of the monomer mixture (A) | | | | | | | | |

From the results shown in Table 1, it can be seen that the foamable resin composition according to the present invention had good thermal insulation properties, gas barrier properties (blowing agent retention capability), and expandability, and succeeded in achieving good cell quality upon pre-expansion due to an average cell size in the range of 50 μm to 400 μm and a relatively uniform cell size distribution.

Conversely, the foamable resin composition of Comparative Example 1, free from the vinyl cyanide monomer, exhibited poor gas barrier properties and poor expandability after long-term (7 days) storage and failed to achieve good cell quality due to the presence of many extremely large cells having a diameter of greater than 400 μm and a non-uniform cell size distribution. In addition, the foamable resin composition of Comparative Example 2, using an excess of the vinyl cyanide monomer, had poor thermal insulation properties, and the foamable resin composition of Comparative Example 3, free from the insulating particles, had poor thermal insulation properties.

It should be understood that various modifications, changes, alterations, and equivalent embodiments can be made by those skilled in the art without departing from the spirit and scope of the invention.

**Claims**

1.    A foamable resin composition comprising:

an aromatic vinyl copolymer resin;
an insulating material; and
a blowing agent,
wherein the aromatic vinyl copolymer resin is a copolymer of a monomer mixture comprising about 90 wt% to about 99 wt% of an aromatic vinyl monomer and about 1 wt% to about 10 wt% of a vinyl cyanide monomer.

2.    The foamable resin composition according to claim 1, comprising: about 100 parts by weight of the aromatic vinyl copolymer resin; about 2 parts by weight to about 8 parts by weight of the insulating material; and about 3 parts by weight to about 15 parts by weight of the blowing agent.

3. The foamable resin composition according to claim 1 or 2, wherein the insulating material comprises at least one of graphite, carbon black, and alumina.

4. The foamable resin composition according to any one of claims 1 to 3, wherein the foamable resin composition consists of particles having an average particle diameter of about 0.5 mm to about 1.7 mm, as measured using ASTM E11 standard sieves.

5. The foamable resin composition according to any one of claims 1 to 4, wherein the foamable resin composition has a thermal conductivity of about 0.029 W/m·K to about 0.034 W/m·K, as measured on a foam specimen in accordance with KS L 9016, the foam specimen being prepared by pre-expansion with steam at a pressure of 0.2 kgf/cm$^2$ to 0.5 kgf/cm$^2$, expansion to a density of 15 kg/m$^3$ to 35 kg/m$^3$ with steam at a pressure of 0.2 kgf/cm$^2$ to 0.5 kgf/cm$^2$, cutting the resulting product to a size of 300 mm×300 mm×50 mm, and drying at 60°C for 48 hours.

6. The foamable resin composition according to any one of claims 1 to 5, wherein the foamable resin composition has a blowing agent retention rate of about 75% to about 95%, as calculated according to Equation 1:

Blowing agent retention rate (%) = (Gi/Go) × 100

where Go is the blowing agent content of the foamable resin composition measured immediately after preparation thereof and $G_1$ is the blowing agent content of the foamable resin composition measured after leaving the foamable resin composition at room temperature under normal pressure for 7 days.

7. The foamable resin composition according to any one of claims 1 to 6, wherein the foamable resin composition has an expansion ratio of about 79 to about 95, as measured after expansion through application of steam at a pressure of 0.2 kgf/cm$^2$ for 5 minutes, followed by drying at 60°C for 2 hours.

8. The foamable resin composition according to any one of claims 1 to 7, wherein the foamable resin composition has an expansion ratio of about 70 to about 85, as measured after leaving the foamable resin composition at room temperature under normal pressure for 7 days, followed by expansion through application of steam at a pressure of 0.2 kgf/cm$^2$ for 5 minutes and drying at 60°C for 2 hours.

9. The foamable resin composition according to any one of claims 1 to 8, wherein the foamable resin composition has an average cell diameter of about 50 $\mu$m to about 400 $\mu$m, as determined by observation of a cross-section of a foam specimen with an optical microscope at 200× magnification, the foam specimen being prepared through application of steam at a pressure of 0.2 kgf/cm$^2$ for 5 minutes.

10. A method of preparing a foamable resin composition, the method comprising:

preparing a suspension by mixing a dispersion medium comprising water and a dispersant with a dispersed phase comprising a monomer mixture comprising about 90 wt% to about 99 wt% of an aromatic vinyl monomer and about 1 wt% to about 10 wt% of a vinyl cyanide monomer, an initiator, and an insulating material;
preparing an aromatic vinyl copolymer resin comprising the insulating material by polymerization of the suspension; and
adding a blowing agent to the aromatic vinyl copolymer resin comprising the insulating material.

11. The method according to claim 10, wherein the dispersed phase comprises about 100 parts by weight of the monomer mixture, about 0.05 parts by weight to about 0.5 parts by weight of the initiator, and about 2 parts by weight to about 8 parts by weight of the insulating material; the dispersion medium comprises 100 parts by weight of the water and about 0.1 parts by weight to about 4 parts by weight of the dispersant; and the dispersed phase and the dispersion medium are present in a weight ratio of about 1:0.8 to about 1:2.

12. The method according to claim 10 or 11, wherein the initiator comprises at least one of benzoyl peroxide, dicumyl peroxide, tertiary-amyl(2-ethylhexyl)monoperoxycarbonate, tertiary-butyl(2-ethylhexyl)monoperoxycarbonate, and dibenzoyl peroxide.

13. The method according to any one of claims 10 to 12, wherein the dispersant comprises at least one of tricalcium phosphate, magnesium pyrophosphate, and calcium carbonate.

**14.** The method according to any one of claims 10 to 13, wherein polymerization of the suspension is carried out at a temperature of about 80°C to about 130°C.

**15.** A molded foam product manufactured by pre-expanding the foamable resin composition according to any one of claims 1 to 9 and charging the resulting product into a mold, followed by heating and fusing.

## INTERNATIONAL SEARCH REPORT

| | International application No. |
|---|---|
| | PCT/KR2019/006095 |

| | |
|---|---|
| **A. CLASSIFICATION OF SUBJECT MATTER** | |
| C08J 9/00(2006.01)i, C08L 25/12(2006.01)i, C08K 3/04(2006.01)i, C08K 3/22(2006.01)i, C08F 212/08(2006.01)i, C08J 3/02(2006.01)i, B29C 44/34(2006.01)i | |
| According to International Patent Classification (IPC) or to both national classification and IPC | |

| |
|---|
| **B. FIELDS SEARCHED** |
| Minimum documentation searched (classification system followed by classification symbols) |
| C08J 9/00; C08F 12/08; C08J 9/14; C08J 9/16; C08J 9/18; C08K 3/04; C08K 5/00; C08L 25/04; C08L 55/02; C08L 25/12; C08K 3/22; C08F 212/08; C08J 3/02; B29C 44/34 |
| Documentation searched other than minimum documentation to the extent that such documents are included in the fields searched<br>Korean utility models and applications for utility models: IPC as above<br>Japanese utility models and applications for utility models: IPC as above |
| Electronic data base consulted during the international search (name of data base and, where practicable, search terms used)<br>eKOMPASS (KIPO internal) & Keywords: expandable, styrene, acrylonitril, graphite |

| | |
|---|---|
| **C. DOCUMENTS CONSIDERED TO BE RELEVANT** | |

| Category* | Citation of document, with indication, where appropriate, of the relevant passages | Relevant to claim No. |
|---|---|---|
| Y | KR 10-0801275 B1 (KOREA KUMHO PETROCHEMICAL CO., LTD.) 04 February 2008<br>See paragraphs [0009], [0015], [0025], [0031] and claims 2, 3, 7. | 1-3,10-12 |
| Y | JP 2006-131719 A (KANEKA CORP.) 25 May 2006<br>See paragraphs [0014], [0044] and claim 4. | 1-3,10-12 |
| A | KR 10-2014-0085261 A (CHEIL INDUSTRIES INC.) 07 July 2014<br>See claims 1, 5, 9. | 1-3,10-12 |
| A | KR 10-2012-0068360 A (KOREA KUMHO PETROCHEMICAL CO., LTD.) 27 June 2012<br>See claims 1, 4, 5, 8. | 1-3,10-12 |
| A | KR 10-0492199 B1 (BASF AKTIENGESELLSCHAFT) 02 June 2005<br>See claims 1, 2. | 1-3,10-12 |

| | | | |
|---|---|---|---|
| ☐ Further documents are listed in the continuation of Box C. | | ☒ See patent family annex. | |

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| | |
|---|---|
| Date of the actual completion of the international search | Date of mailing of the international search report |
| 21 AUGUST 2019 (21.08.2019) | **22 AUGUST 2019 (22.08.2019)** |
| Name and mailing address of the ISA/KR<br>Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Authorized officer<br><br>Telephone No. |

Form PCT/ISA/210 (second sheet) (January 2015)

## INTERNATIONAL SEARCH REPORT

| International application No. |
|---|
| PCT/KR2019/006095 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☒ Claims Nos.: 4-9, 13-15
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

INTERNATIONAL SEARCH REPORT
Information on patent family members

International application No.

**PCT/KR2019/006095**

| Patent document cited in search report | Publication date | Patent family member | Publication date |
|---|---|---|---|
| KR 10-0801275 B1 | 04/02/2008 | CA 2639270 A1 | 26/01/2009 |
| | | CA 2639270 C | 31/01/2012 |
| | | CN 101353439 A | 28/01/2009 |
| | | CN 101353439 B | 05/09/2012 |
| | | EP 2025691 A2 | 18/02/2009 |
| | | EP 2025691 A3 | 21/10/2009 |
| | | EP 2025691 B1 | 06/02/2013 |
| | | ES 2400244 T3 | 08/04/2013 |
| | | JP 2009-536687 A | 15/10/2009 |
| | | PT 2025691 E | 25/03/2013 |
| | | RU 2376318 C1 | 20/12/2009 |
| | | UA 97945 C2 | 10/04/2012 |
| | | US 2009-0030096 A1 | 29/01/2009 |
| | | US 7714029 B2 | 11/05/2010 |
| | | WO 2007-114529 A1 | 11/10/2007 |
| | | WO 2009-014279 A1 | 29/01/2009 |
| JP 2006-131719 A | 25/05/2006 | JP 4843934 B2 | 21/12/2011 |
| KR 10-2014-0085261 A | 07/07/2014 | None | |
| KR 10-2012-0068360 A | 27/06/2012 | KR 10-1242744 B1 | 11/03/2013 |
| KR 10-0492199 B1 | 02/06/2005 | AT 196490 T | 15/10/2000 |
| | | AU 2954497 A | 08/12/1998 |
| | | AU 748704 B2 | 13/06/2002 |
| | | BR 9714665 A | 11/07/2000 |
| | | CA 2290007 A1 | 19/11/1998 |
| | | CA 2290007 C | 11/07/2006 |
| | | CZ 295239 B6 | 15/06/2005 |
| | | CZ 9904001 A3 | 14/11/2001 |
| | | EP 0981575 A1 | 01/03/2000 |
| | | EP 0981575 B1 | 20/09/2000 |
| | | ES 2151270 T3 | 16/12/2000 |
| | | JP 2001-522383 A | 13/11/2001 |
| | | JP 3954112 B2 | 08/08/2007 |
| | | KR 10-2001-0012557 A | 15/02/2001 |
| | | NO 320579 B1 | 27/12/2005 |
| | | NO 995552 L | 12/11/1999 |
| | | PL 186332 B1 | 31/12/2003 |
| | | PL 336703 A1 | 03/07/2000 |
| | | US 6130265 A | 10/10/2000 |
| | | WO 98-51734 A1 | 19/11/1998 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100492199